Europäisches Patentamt

European Patent Office

Office européen des brevets

(11) Veröffentlichungsnummer: **0 673 707 A2**

# EUROPÄISCHE PATENTANMELDUNG

(21) Anmeldenummer: **95101098.2**

(22) Anmeldetag: **27.01.95**

(51) Int. Cl.6: **B23P 19/04**

(30) Priorität: **31.01.94 DE 9401515 U**

(43) Veröffentlichungstag der Anmeldung:
**27.09.95 Patentblatt 95/39**

(84) Benannte Vertragsstaaten:
**AT CH DE ES GB LI**

(71) Anmelder: **DE-STA-CO Metallerzeugnisse GmbH**
**Industriestrasse 17-23**
**D-61449 Steinbach/Ts. (DE)**

(72) Erfinder: **Gehrig, Dieter**
**Auf der Pfalz 23**
**D-79528 Efringen-Kirchen (DE)**

(74) Vertreter: **Wolf, Günter, Dipl.-Ing.**
**Postfach 70 02 45**
**D-63427 Hanau (DE)**

(54) **Füge- oder Trennvorrichtung.**

(57) Die Erfindung betrifft eine Vorrichtung insbesondere für die Füge- oder Trennbearbeitung von Werkstücken, bestehend aus einem Vorrichtungsgestell (1) mit einer im Gestelloberteil (2) angeordneten, von einem Betätigungszylinder linear verstellbaren, am freien Ende mit dem Werkzeug (W) versehenen Werkzeugträgerstange (WS) und einem dazu fluchtend im Gestellunterteil (4) angeordneten Gegenwerkzeug (GW). Erfindungswesentlich ist hierfür, daß die Werkzeugbetätigungsstange (WS) zweiteilig ausgebildet ist und daß das Stangenoberteil (5) und das in dieses eingreifende, in Höchststellung am Gestell (1) verrastbare Stangenunterteil (6) im Gestell (1) verschieblich gelagert sind. Am freien Ende (5') des Stangenoberteiles (5) ist ein automatisch betätigbarer, in abgesenkter Stellung des Unterteiles (6) zwischen dieses und das Stangenoberteil (5) verstellbarer Querschieber (7) angeordnet. Die Distanz (D) zwischen dem Ende (6') des eingreifenden Unterteiles (6) und dem Boden (8') der Eingriffsausnehmung (8) des Stangenoberteiles (5) ist größer bemessen als dessen Hub.

FIG.3

Die Erfindung betrifft eine Vorrichtung, insbesondere für die Füge- oder Trennbearbeitung von Werkstücken, bestehend aus einem Vorrichtungsgestell mit einer im Gestelloberteil angeordneten, von einem Betätigungszylinder linear verstellbaren, am freien Ende mit dem Werkzeug versehenen Werkzeugträgerstange und einem dazu fluchtend im Gestellunterteil angeordneten Gegenwerkzeug.

Bei linear betätigten Vorrichtungen dieser Art verlangt der Gesetzgeber bei einer Öffnung von mehr als 6 mm zwischen Festanschlag und beweglichem Teil eine Sicherheitsvorrichtung, d.h., der Krafthub darf erst dann ausgelöst werden, wenn der Abstand zwischen Festanschlag und beweglichem Teil max. 6 mm beträgt, um sicherzustellen, daß kein Finger mehr dazwischengelegt werden kann. Der Festanschlag ist hierbei der Auflagetisch für bspw. durch Fügen zu verbindende Werkstücke, also bspw. zwei Bleche. Bei Werkstücken für die eine größere Öffnung als 6 mm erforderlich ist, ist deshalb eine Zweihandsicherheitssteuerung mit zusätzlicher Abschirmung vorgeschrieben, die gewährleistet, daß bei Auslösung des Krafthubes beide Hände in Anspruch genommen sind und sich nicht zwischen den Werkzeugen befinden können. Der Erfindung liegt die Aufgabe zugrunde, eine Vorrichtung der gattungsgemäßen Art mit einfachen Mitteln dahingehend zu verbessern, daß den Sicherheitsanforderungen auch mit einer Einhandbedienung genügt werden kann und sonstige und übliche Abschirmmaßnahmen entbehrlich sind.

Diese Aufgabe ist mit einer Vorrichtung der gattungsgemäßen Art nach der Erfindung dadurch gelöst, daß die Werkzeugbetätigungsstange zweiteilig ausgebildet ist und daß das Stangenoberteil und das in das Oberteil eingreifende, in Höchststellung am Gestell verrastbare Stangenunterteil im Gestell verschieblich gelagert sind, daß am freien Ende des Stangenoberteiles ein automatisch betätigbarer, in abgesenkter Stellung des Unterteils zwischen dieses und das Stangenoberteil verstellbarer Querschieber angeordnet ist und daß die Distanz zwischen dem Ende des eingreifenden Unterteiles und dem Boden der Eingriffsausnehmung des Stangenoberteiles größer bemessen ist als der Hub des Stangenoberteiles.

Der Kern der Erfindung besteht also darin, daß der Krafthub erst dann ausgelöst werden kann, wenn der Abstand zwischen dem Gegenwerkzeug und dem Werkzeug ≦ 6 mm ist, und zwar im Arbeitsbereich, wo gefügt, gestanzt oder gepreßt werden soll.

Mit der erfindungsgemäßen Ausbildung ist dies dadurch verwirklicht, daß ein Druck auf das Stangenunterteil erst ausgeübt werden kann, wenn sich der Querschieber zwischen dem Stangenoberteil und dem Stangenunterteil befindet, wobei der Einschub des Schiebers erst möglich ist, wenn Ober- und Unterteil voneinander völlig getrennt sind, d.h., das Unterteil nach seiner Entrastung am Gestell auf dem Werkstück aufgesetzt ist. Selbst bei einer versehentlichen Betätigung des Betätigungszylinders kann bzgl. der Verrastung des Stangenunterteiles nichts passieren, da die oben erwähnte Distanz größer bemessen ist als der Hub des Stangenoberteiles, das ja die Kolbenstange des Betätigungszylinders bildet.

Soll ein Werkstück einem Bearbeitungsvorgang (bspw. Fügen oder Stanzen) unterzogen werden, so wird zunächst das Stangenunterteil entrastet und auf das Werkstück abgesenkt, wobei das Stangenunterteil vom Stangenoberteil entkoppelt wird und ein Freiraum für den Einschub des Schiebers entsteht. Gleichzeitig ausgelöst, aber voreilend zum Betätigungshub, wird der Querschieber eingeschoben, mit dem die durch die Entkopplung entstandene Distanz zwischen den Stangenteilen überbrückt und der Krafthub vom Stangenoberteil auf das Stangenunterteil übertragen wird. Nach Beendigung des Krafthubes geht das Stangenoberteil wieder in seine Ausgangsstellung zurück und das Stangenunterteil wird per Hand wieder in seine Höchststellung zurückgestellt und am Gestell verrastet, wofür vorteilhaft am Stangenunterteil ein in einer Schlitzführung des Gestelles in Verstellrichtung verstellbarer, zugriffsgünstiger und in angehobener Stellung verrastbarer Stellhebel angeordnet ist.

Um das Stangenoberteil und das Stangenunterteil mit dem gleichen Durchmesser bemessen zu können, ist das Stangenunterteil vorteilhaft mit einem in bezug auf das Stangenoberteil durchmesserreduzierten Zapfen versehen, der in eine durchmesserentsprechende Eingriffsausnehmung des Stangenoberteiles eingreift. Umgekehrt ist es aber auch möglich, das Stangenoberteil mit einem Zapfen in eine entsprechende Eingriffsausnehmung des Unterteiles eingreifen zu lassen, wobei dann aber der Querschieber am Stangenunterteil angebracht sein muß.

Die erfindungsgemäße Vorrichtung wird nachfolgend anhand der zeichnerischen Darstellung eines Ausführungsbeispieles näher erläutert.

Es zeigt

Fig. 1    perspektivisch eine typische Form einer derartigen Vorrichtung;

Fig. 2    schematisch die hier im wesentlichen interessierenden Teile einer solchen Vorrichtung in Öffnungsstellung;

Fig. 3    eine der Fig. 2 entsprechende Darstellung im aufgesetzten Zustand beim Krafthub und

Fig. 4    schematisch eine Gegenüberstellung der Stangenteile links im geöffneten Zustand und rechts in Arbeitsstellung.

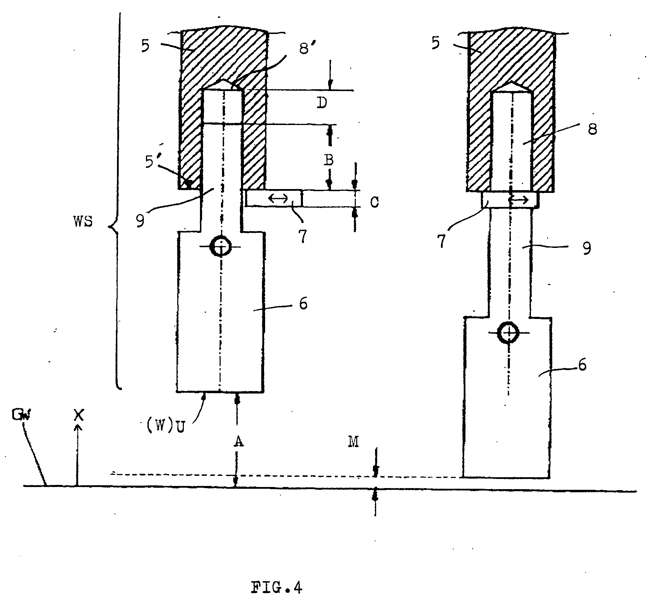

Die Vorrichtung besteht aus einem Vorrichtungsgestell 1 mit einer im Gestelloberteil 2 angeordneten, von einem Betätigungszylinder 3 linear verstellbaren, am freien Ende mit dem Werkzeug W versehenen Werkzeugträgerstange WS und einem dazu fluchtend im Gestellunterteil 4 angeordneten Gegenwerkzeug GW (siehe auch Fig. 3).

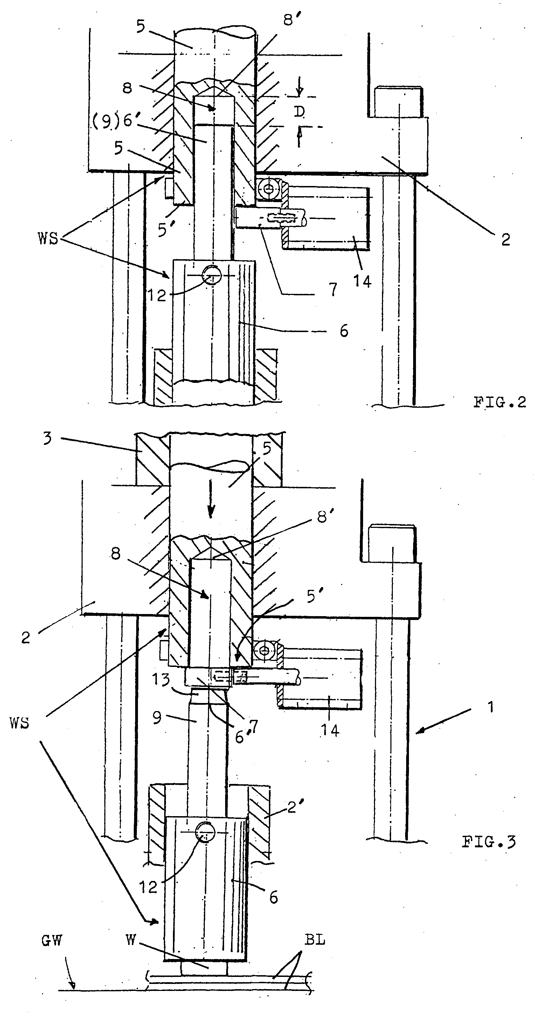

Gemäß Fig. 2, 3, die nur die hier interessierenden Elemente in Öffnungsstellung (Fig. 2) und einmal in Arbeitsstellung, also bei untergelegtem Werkstück (hier zwei zu fügende Bleche BL) zeigen, ist nun für die Vorrichtung wesentlich, daß die Werkzeugbetätigungsstange WS zweiteilig ausgebildet ist und daß das Stangenoberteil 5 und das in das Oberteil 5 eingreifende, in Höchststellung am Gestell 1 verrastbare und in einer zum Gestell gehörenden Führung 2' geführte Stangenunterteil 6 im Gestell 1 verschieblich gelagert sind, daß am freien Ende 5' des Stangenoberteiles 5 ein automatisch betätigbarer, in abgesenkter Stellung des Unterteiles 6 zwischen dieses und das Stangenoberteil 5 verstellbarer Querschieber 7 angeordnet ist und daß die Distanz D zwischen dem Ende 6' des eingreifenden Stangenunterteiles 6 und dem Boden 8' der Eingriffsausnehmung 8 des Stangenoberteiles 5 größer bemessen ist als dessen Hub.

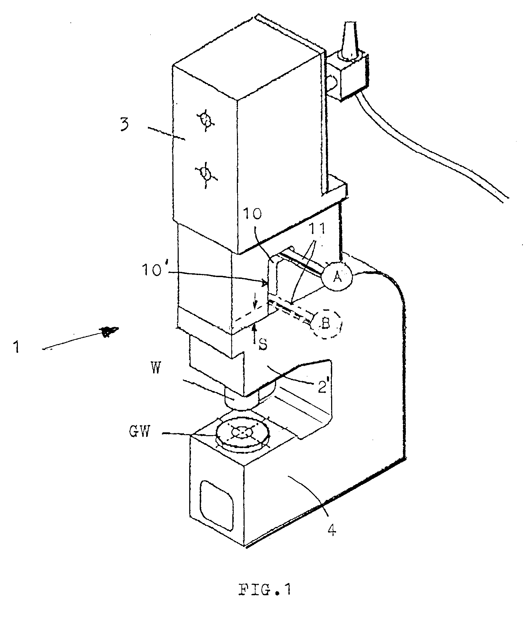

Aus den genannten Gründen ist das Stangenoberteil 6 mit einem in bezug auf das Stangenoberteil 5 durchmesserreduzierten Zapfen 9 versehen, der in die durchmesserentsprechende Eingriffsausnehmung 8 des Stangenoberteiles 5 eingreift. Außerdem ist am Stangenunterteil 6 ein in einer Schlitzführung 10 des Gestelles 1 (siehe Fig. 1) in Verstellrichtung verstellbarer und in angehobener Stellung verrastbarer Stellhebel 11 angeordnet. Der vertikal orientierte Teil 10' der Schlitzführung ist nach unten so begrenzt, daß für den Stellhebel 11 nach unten noch soviel Spiel 5 bzw. Weg verfügbar ist, daß das Stangenunterteil 6 noch den Krafthub ausführen kann. Für die Anbringung des Stellhebels 11 ist im übrigen das Stangenunterteil 6 mit einer Gewindebohrung 12 versehen. Am oberen Ende ist die Schlitzführung 10, wie dargestellt, abgeknickt, so daß dort der Stellhebel 11 verrastet werden kann, was einer Stellung gemäß Fig. 2 entspricht.

Mit einer derartigen Vorrichtung wird wie folgt gearbeitet: Zunächst wird das Werkstück auf das Gestellunterteil bzw. das Gegenwerkzeug GW aufgelegt, wobei sich das Stangenunterteil 6 mit seinem Werkzeug W in angehobener Stellung befindet, bei der sich der Stellhebel 11 in der in Fig. 1 dargestellten Verrastungsstellung A befindet. Nun wird der Stellhebel entrastet und in Stellung B gebracht, was mit einer Absenkung und Auflage des Werkzeuges W auf dem Werkstück verbunden ist. Dabei ist der Zapfen 9 des Stangenunterteiles 6 soweit aus der Eingriffsausnehmung 8 herausgefahren und hat zum Ende 5' des Stangenoberteiles 5 mindestens eine solche Distanz, daß der Querschieber 7 dazwischengefahren werden kann. Da die Höhen der Werkstücke < 6 mm sein können, kann die Werkstücksauflage (nicht besonders dargestellt) bzw. das Gegenwerkzeug GW im Gestellunterteil 4 in X-Richtung einstellbar ausgebildet sein, um den Höhenunterschied auszugleichen. Nun kann der Betätigungszylinder 3 eingeschaltet werden, wobei in der Schaltung dafür gesorgt ist, daß der Abwärtsbewegung des Stangenoberteiles 5 die Betätigung des Querschiebers 7 voreilt, da sich dieser für den Arbeitshub zwischen dem unteren Ende 5' des Stangenoberteiles 5 befinden muß, um überhaupt den Krafthub wirksam werden lassen zu können.

Nach Beendigung der jeweiligen Bearbeitung (Fügen, Stanzen, Pressen o. dgl.) geht das Stangenoberteil 5 wieder automatisch nach oben, und der Querschieber 7 stellt sich in die Position gemäß Fig. 2 zurück, so daß danach das Stangenunterteil 6 per Stellhebel 11 ebenfalls angehoben und verrastet werden kann. Das Stangenunterteil 6 ist zwar in der Führung 2' geführt, für die Rückführung des Zapfens 9 in die Ausnehmung 8 ist es aber vorteilhaft, deren oberes Ende 6' mit einer Anfasung 13 zu versehen, wie dies in Fig. 3 angedeutet ist. Der Querschieber 7 hat einen Querschnitt, der größer ist als der der Ausnehmung 8. Der Stellantrieb des Querschiebers 7 ist mit 14 bezeichnet.

In der Fig. 4 sind schematisch die Stangenteile nochmals verdeutlicht und zwar links die Stellung, bei der das bzw. die Werkstücke eingelegt werden können und rechts bei auf das Werkstück aufgesetztem Stangenunterteil 6 und zwischengefahrenem Querschieber 7. In der Darstellung links ist die Bedingung A = B + C + 6 mm bei angehobener und verrasteter Stellung des Stangenunterteiles 6 verdeutlicht, die notwendig ist, um den Sicherheitsanforderungen bei einer derart ausgebildeten Vorrichtung zu genügen.

**Patentansprüche**

1. Vorrichtung, insbesondere für die Füge- oder Trennbearbeitung von Werkstücken, bestehend aus einem Vorrichtungsgestell (1) mit einer im Gestelloberteil (2) angeordneten, von einem Betätigungszylinder (3) linear verstellbaren, am freien Ende mit dem Werkzeug (W) versehenen Werkzeugträgerstange (WS) und einem dazu fluchtend im Gestellunterteil (4) angeordneten Gegenwerkzeug (GW),
   **dadurch gekennzeichnet,**
   daß die Werkzeugbetätigungsstange (WS) zweiteilig ausgebildet ist und daß das Stangenoberteil (5) und das in dieses eingreifende, in Höchststellung am Gestell (1) verrastbare Stangenunterteil (6) im Gestell (1) verschieblich gelagert sind,
daß am freien Ende (5') des Stangenoberteiles (5) ein automatisch betätigbarer, in abgesenkter Stellung des Unterteiles (6) zwischen dieses und das Stangenoberteil (5) verstellbarer Querschieber (7) angeordnet ist,
daß die Distanz (D) zwischen dem Ende (6') des Raststellung eingreifenden Unterteiles (6) und dem Boden (8') der Eingriffsausnehmung (8) des Stangenoberteiles (5) größer bemessen ist als der Hub des Stangenoberteiles (5) und
daß die Distanz (A) bei Verrastungsstellung des Stangenunterteiles (6) zwischen Gegenwerkzeug (GW) und Unterkante (U) des Werkzeuges (W) der Summe aus Eingriffslänge (B) des Stangenunterteiles (6), der Stärke (C) des Schiebers (7) und dem Maß (M) = 6 mm entspricht.

2. Vorrichtung nach Anspruch 1,
**dadurch gekennzeichnet,**
daß das Stangenunterteil (6) mit einem in bezug auf das Stangenoberteil (5) durchmesserreduzierten Zapfen (9) versehen und dieser in die durchmesserentsprechende Eingriffsausnehmung (8) des Stangenoberteiles (5) eingreift.

3. Vorrichtung nach Anspruch 1 oder 2,
**dadurch gekennzeichnet,**
daß am Stangenunterteil (6) ein in einer Schlitzführung (10) des Gestelles (1) in Verstellrichtung verstellbarer und in angehobener Stellung verrastbarer Stellhebel (11) angeordnet ist.

4. Vorrichtung nach einem der Ansprüche 1 bis 4,
**dadurch gekennzeichnet,**
daß das Gegenwerzeug (GW) im Gestellunterteil (4) in X-Richtung höheneinstellbar angeordnet ist.

5. Vorrichtung nach einem der Ansprüche 1 bis 4,
**dadurch gekennzeichnet,**
daß das obere Ende (6') des Zapfens (9) mit einer Anfasung (13) versehen ist.

FIG.1

FIG.2

FIG.3

FIG.4